# EUROPEAN PATENT APPLICATION

(11) **EP 4 438 211 A1**
(43) Date of publication of application: **02.10.2024**
(21) Application number: 24161316.5
(22) Date of filing: 05.03.2024
(51) Int. Cl.: B23D 31/00, B21D 24/16, B21D 51/26, B23D 21/14

(54) **TRIMMING DEVICE AND METHOD FOR RECTANGULAR CONTAINER, AND RECTANGULAR CONTAINER**

(30) Priority: 29.03.2023 JP 2023053202
(71) Applicant: Aida Engineering Ltd., Sagamihara-shi Kanagawa 252-5181 (JP)
(72) Inventor: IWAMURA, Ryosho, Kanagawa, 252-5181 (JP); KUMASAKA, Toru, Kanagawa, 252-5181 (JP)
(74) Representative: Grosse, Felix Christopher

(57) **Abstract**

Provided is a trimming device 1 for a rectangular container configured to cut a rectangular container 100 along a trim line 100A, and includes: a die 10, which accommodates an outer periphery of the rectangular container 100, and is arranged along the trim line 100A on a lower side thereof; a punch 20 movable within a plane parallel to a bottom surface 101; a long-axis direction drive unit 61 configured to move the punch 20 along a long-axis direction of the rectangular container 100; a first short-axis direction drive unit 62, which is arranged on a proximal side of the long-axis direction drive unit 61, and is configured to move the punch 20 along a short-axis direction; and a second short-axis direction drive unit 63, which is arranged side by side with the first short-axis direction drive unit 62 along the long-axis direction on a distal side from the long-axis direction drive unit 61, and is configured to move the punch 20 along the short-axis direction of the rectangular container 100.

## Description

The present invention relates to a trimming technology for a rectangular container having one end opened and a bottom portion at the other end.

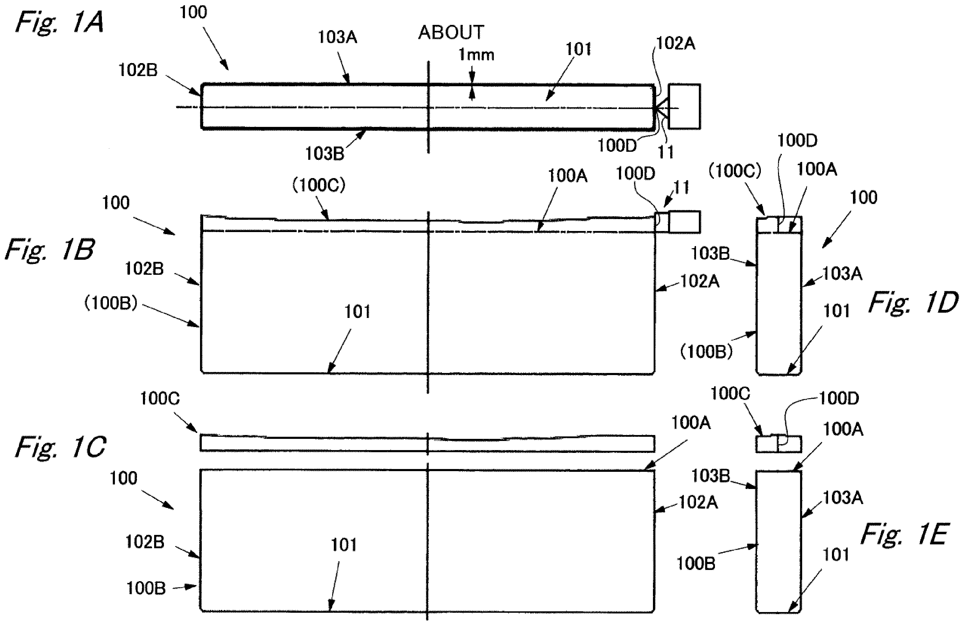

As illustrated in Fig. 1, in drawing (or draw forming), a formed article obtained by drawing is subjected to trimming of cutting (cutting off) an end portion of a side wall of the formed product on an open end side, thereby obtaining a product.

Hitherto, edge cutting (trimming, trim) for a drawn product may be performed, for example, in a transfer press that has performed drawing, by converting a longitudinal motion of a slide into a motion in a circumferential direction (arc motion) of a punch for trimming along a contour of a product through use of a cam (so-called staggering cam).

Further, JP 2020 104 122 A discloses a device that performs trimming by converting a rotational motion of an electric motor into a motion of a punch in a circumferential direction through use of a gear mechanism and a link mechanism instead of the cam as described above.

Further, regarding a rectangular container (container having a cross-sectional shape parallel to a bottom surface being a rectangular shape), as a device that trims the rectangular container in a process different from a process of drawing, for example, JP 2012 157 959 A discloses a device that cuts side walls of the rectangular container which face each other from two directions orthogonal to the side walls, respectively, is given.

Regarding a so-called staggering cam to be used for trimming, there is such a circumstance that, for example, since it is require to convert a up-and-down direction motion of a press slide into an arc motion in a horizontal plane by a cam mechanism provided in a die, a configuration of the mechanism is complicated so that skilled technicians or operators are required for design, adjustment, and maintenance for the cam and the mechanism, and experience is further required for designing a die to be used for a trimming method using this type of cam.

Further, the longitudinal motion of the press slide is converted into the arc motion of the die by the cam, and hence a large stroke length of the press is required, and it is basically a trimming method suitable for a drawn product having a cylindrical shape (cross-sectional shape parallel to the bottom surface being a circular shape).

Further, in the device disclosed in JP 2020 104 122 A, the complicated gear mechanism and link mechanism for converting the rotational motion of the electric motor into the motion of the punch in the circumferential direction are required. Thus, there is a circumstance that, when the thickness of the plate or the shape of the rectangular container is desired to be changed, even when the change is small, a troublesome operation which needs time is required, for example, the gear mechanism and the link mechanism are required to be readjusted or redesigned dedicatedly, or a gear or a link component is required to be remade. When a replacement operation for components of the gear mechanism or the link mechanism is performed, there is a fear in that production efficiency is degraded because, for example, the production line is required to be stopped for a relatively long time.

Further, there is a circumstance that, in the device disclosed in JP 2020 104 122 A, a punch having an inclined shape formed complicatedly and highly accurately for cutting obliquely at the start of trimming is required, thereby increasing a running cost of a facility, and therefore, a manufacturing cost.

In addition, there is a circumstance that, in the device disclosed in JP 2012 157 959 A which performs trimming from two directions orthogonal to each other, the trim process is divided into two processes, and hence a matching burr (pointed burr generated due to an error of a merging portion of cutting lines from two directions) is liable to occur. Thus, there is a circumstance that a relatively troublesome countermeasure for suppressing generation of a matching burr is required, such as, at the expense of quality as the product, a relatively large step is formed in advance on a trimmed portion, or loose shear drop is reduced.

According to the present invention, there is provided a trimming device for a rectangular container, which is configured to cut a rectangular container along a plane including a predetermined trim line parallel to a bottom surface, the rectangular container having one end opened and a bottom portion at the other end and having a transverse cross-sectional shape parallel to the bottom surface being a rectangular shape, the trimming device comprising: a die, which is integrally supported on a trimming device main body, accommodates an outer periphery of the rectangular container, and is arranged along the trim line; a punch, which is accommodated inside the rectangular container with a predetermined gap with the transverse cross-sectional shape inside the rectangular container, and is supported on the trimming device main body so as to be movable within a plane parallel to the bottom surface; a long-axis direction drive unit, which is configured to move the punch along a long-axis direction in the transverse cross-sectional shape of the rectangular container; a first short-axis direction drive unit, which is configured to move the punch along a short-axis direction in the transverse cross-sectional shape of the rectangular container; and a second short-axis direction drive unit, which is arranged side by side with the first short-axis direction drive unit along the long-axis direction, and is configured to move the punch along the short-axis direction in the transverse cross-sectional shape of the rectangular container.

In the trimming device for a rectangular container according to the present invention, the long-axis direction drive unit, the first short-axis direction drive unit, and the second short-axis direction drive unit may be driven independent of each other.

The trimming device for a rectangular container according to the present invention may be configured to: drive the long-axis direction drive unit and move the punch along the long-axis direction to trim one short side of a rectangular container along the trim line in cooperation with the die; drive one of the first short-axis direction drive unit and the second short-axis direction drive unit, which is on a side closer to the one short side, and move the punch in the short-axis direction from a state of the punch that has ended the trimming, to incline the punch and to trim a side of one long side on the one short side of the rectangular container that is connected to the one short side along the trim line, in cooperation with the die; drive one of the first short-axis direction drive unit and the second short-axis direction drive unit, which is on a side farther from the one short side, and move the punch in the short-axis direction from a state of the punch that has ended the trimming, to return the punch from the inclined state to a state of being parallel to the long-axis direction, and trim an uncut portion of the one long side along the trim line in cooperation with the die; reversely drive the long-axis direction drive unit and move the punch in the long-axis direction from a state of the punch that has ended the trimming, to trim the other short side of the rectangular container along the trim line in cooperation with the die; drive the first short-axis direction drive unit and the second short-axis direction drive unit and move the punch in parallel toward the other long side of the rectangular container from a state of the punch that has ended the trimming, to trim an uncut portion of the other short side along the trim line in cooperation with the die; drive one of the first short-axis direction drive unit and the second short-axis direction drive unit, which is on a side closer to the other short side, and move the punch in the short-axis direction from a state of the punch that has ended the trimming, to incline the punch and trim a side of the other long side on the other short side along the trim line in cooperation with the die; drive one of the first short-axis direction drive unit and the second short-axis direction drive unit, which is on a side farther from the other short side, and move the punch in the short-axis direction from a state of the punch that has ended the trimming to return the punch from the inclined state to a state of being parallel to the long-axis direction, and trim an uncut portion of the other long side along the trim line in cooperation with the die; and drive the long-axis direction drive unit and move the punch in the long-axis direction from a state of the punch that has ended the trimming, to trim an uncut portion of the one short side along the trim line in cooperation with the die.

The trimming device for a rectangular container according to the present invention may further include a weak portion forming portion configured to form, at the time of driving the long-axis direction drive unit and moving the punch in the long-axis direction to trim one short side of the rectangular container along the trim line in cooperation with the die, a weak portion reduced in thickness from other portion on an opening side above the trim line of the one short side of the rectangular container by using the movement of the punch.

Further, according the present invention, there is provided a trimming method for a rectangular container, which is to be used for a trimming device for a rectangular container, the trimming device being configured to cut a rectangular container along a plane including a predetermined trim line parallel to a bottom surface, the rectangular container having one end opened and a bottom portion at the other end and having a transverse cross-sectional shape parallel to the bottom surface being a rectangular shape, the trimming device including: a die, which is integrally supported on a trimming device main body, accommodates an outer periphery of the rectangular container, and is arranged along the trim line; a punch, which is accommodated inside the rectangular container with a predetermined gap with the transverse cross-sectional shape inside the rectangular container, and is supported on the trimming device main body so as to be movable within a plane parallel to the bottom surface; a long-axis direction drive unit, which is configured to move the punch along a long-axis direction in the transverse cross-sectional shape of the rectangular container; a first short-axis direction drive unit, which is configured to move the punch along a short-axis direction in the transverse cross-sectional shape of the rectangular container; and a second short-axis direction drive unit, which is arranged side by side with the first short-axis direction drive unit along the long-axis direction, and is configured to move the punch along the short-axis direction in the transverse cross-sectional shape of the rectangular container, the trimming method including: driving the long-axis direction drive unit and moving the punch along the long-axis direction to trim one short side of a rectangular container along the trim line in cooperation with the die; driving one of the first short-axis direction drive unit and the second short-axis direction drive unit, which is on a side closer to the one short side, and moving the punch in the short-axis direction from a state of the punch that has ended the trimming, to incline the punch and to trim a side of one long side on the one short side of the rectangular container that is connected to the one short side along the trim line, in cooperation with the die; driving one of the first short-axis direction drive unit and the second short-axis direction drive unit, which is on a side farther from the one short side, and moving the punch in the short-axis direction from a state of the punch that has ended the trimming, to return the punch from the inclined state to a state of being parallel to the long-axis direction, and trim an uncut portion of the one long side along the trim line in cooperation with the die; reversely driving the long-axis direction drive unit and moving the punch in the long-axis direction from a state of the punch that has ended the trimming, to trim the other short side of the rectangular container along the trim line in cooperation with the die; driving the first short-axis direction drive unit and the second short-axis direction drive unit and move the punch in parallel toward the other long side of the rectangular container from a state of the punch that has ended the trimming, to trim an uncut portion of the other short side along the trim line in cooperation with the die; driving one of the first short-axis direction drive unit and the second short-axis direction drive unit, which is on a side closer to the other short side, and moving the punch in the short-axis direction from a state of the punch that has ended the trimming, to incline the punch and trim a side of the other long side on the other short side along the trim line in cooperation with the die; driving one of the first short-axis direction drive unit and the second short-axis direction drive unit, which is on a side farther from the other short side, and moving the punch in the short-axis direction from a state of the punch that has ended the trimming, to return the punch from the inclined state to a state of being parallel to the long-axis direction, and trim an uncut portion of the other long side along the trim line in cooperation with the die; and driving the long-axis direction drive unit and moving the punch in the long-axis direction from a state of the punch that has ended the trimming, to trim an uncut portion of the one short side along the trim line in cooperation with the die.

The trimming method for a rectangular container according to the present invention may further include forming, at the time of driving the long-axis direction drive unit and moving the punch in the long-axis direction to trim the one short side of the rectangular container along the trim line in cooperation with the die, a weak portion reduced in thickness from other portion on an opening side above the trim line of the one short side of the rectangular container by using the movement of the punch.

According to the present invention, there is provided a rectangular container, which is produced by the above-mentioned trimming device for a rectangular container of the present invention.

According to the present invention, there is provided a rectangular container, which is produced by the above-mentioned trimming method for a rectangular container of the present invention.

A more complete appreciation of the invention and many of the attendant advantages thereof will be readily obtained as the same becomes better understood by reference to the following detailed description when considered in connection with the accompanying figures, wherein
- Fig. 1A: is a plan view of a drawn article and a V protruding die according to one embodiment of the present invention (as viewed from an upper surface opening side along a direction orthogonal to a bottom surface of the drawn article);
- Fig. 1B: is a front view of the drawn article and the V protruding die (as viewed from a direction orthogonal to a side wall of a long side);
- Fig. 1C: is a front view for illustrating the drawn article separated into a scrap and a product by trimming processing;
- Fig. 1D: is a right side view of Fig. 1B;
- Fig. 1E: is a right side view of Fig. 1C;
- Fig. 2: is a front view of a trimming device for a rectangular container according to one embodiment of the present invention;
- Fig. 3: is a right side view of Fig. 2;
- Fig. 4: is a plan view of a support structure portion for a punch holder, a slide plate, and a punch of the trimming device in an extracted manner;
- Fig. 5: is a plan view for illustrating three drive units (a long-axis direction drive unit, a first short-axis direction drive unit, and a second short-axis direction drive unit) of the trimming device;
- Fig. 6A: is an explanatory schematic plan view for illustrating step 1 of trimming processing to be performed by a trimming device and method for a rectangular container (motion of the punch with respect to the drawn article) according to one embodiment of the present invention;
- Fig. 6B: is an explanatory schematic plan view for illustrating step 2 of the trimming processing;
- Fig. 6C: is an explanatory schematic plan view for illustrating step 3 of the trimming processing;
- Fig. 7A: is an explanatory schematic plan view for illustrating step 4 of the trimming processing to be performed by the trimming device and method for a rectangular container (motion of the punch with respect to the drawn article);
- Fig. 7B: is an explanatory schematic plan view for illustrating step 5 of the trimming processing;
- Fig. 7C: is an explanatory schematic plan view for illustrating step 6 of the trimming processing;
- Fig. 8A: is an explanatory schematic plan view for illustrating step 7 of the trimming processing to be performed by the trimming device and method for a rectangular container (motion of the punch with respect to the drawn article);
- Fig. 8B: is an explanatory schematic plan view for illustrating step 8 of the trimming processing;
- Fig. 8C: is an explanatory schematic plan view for illustrating step 9 of the trimming processing;
- Fig. 9A: is an explanatory schematic plan view for illustrating step 10 of the trimming processing to be performed by the trimming device and method for a rectangular container (motion of the punch with respect to the drawn article);
- Fig. 9B: is an explanatory schematic plan view for illustrating step 11 of the trimming processing;
- Fig. 10A: is an explanatory schematic plan view for illustrating step 1 of the trimming processing to be performed by the trimming device and method for a rectangular container, in which the drawn article and the punch are extracted;
- Fig. 10B: is an explanatory schematic plan view for illustrating step 2 of the trimming processing;
- Fig. 10C: is an explanatory schematic plan view for illustrating step 3 of the trimming processing;
- Fig. 11A: is an explanatory schematic plan view for illustrating step 4 of the trimming processing;
- Fig. 11B: is an explanatory schematic plan view for illustrating step 5 of the trimming processing;
- Fig. 11C: is an explanatory schematic plan view for illustrating step 6 of the trimming processing;
- Fig. 12A: is an explanatory schematic plan view for illustrating step 7 of the trimming processing;
- Fig. 12B: is an explanatory schematic plan view for illustrating step 8 of the trimming processing;
- Fig. 12C: is an explanatory schematic plan view for illustrating step 9 of the trimming processing;
- Fig. 13A: is an explanatory schematic plan view for illustrating step 10 of the trimming processing;
- Fig. 13B: is an explanatory schematic plan view for illustrating step 11 of the trimming processing;
- Fig. 14A: is a timing chart for showing rotation angle positions (drive states: positions of the punch) of an electric motor of a long-axis direction drive unit in the respective steps;
- Fig. 14B: is a timing chart for showing rotation angle positions (drive states: positions of the punch) of an electric motor of the first short-axis direction drive unit in the respective steps;
- Fig. 14C: is a timing chart for showing rotation angle positions (drive states: positions of the punch) of an electric motor of the second short-axis direction drive unit in the respective steps; and
- Fig. 15: is a plan view for illustrating another configuration example of the drive unit of the trimming device for a rectangular container according to the present invention.

Now, an embodiment of the present invention is described with reference to the attached drawings. Note that, the present invention is not limited to the embodiment described below.

A trimming device and method for a rectangular container (or a rectangular tube container) according to this embodiment involves driving for moving a punch for trimming from three directions so that pushing and pulling of the punch in the three directions can be performed, and cutting is progressed by a controller sequentially and continuously, thereby enabling trimming that does not cause deformation of a product. Further, the trimming is completed with one punch. Thus, occurrence of a shear drop and a burr can be suppressed by only securing an appropriate loose clearance without considering a matching burr.

The present invention has been made in view of the above-mentioned circumstances, and has an object to provide a trimming device and method for a rectangular container, which enables high-quality trimming while suppressing, for example, occurrence of a matching burr with a relatively simpler configuration and without requiring skill or an advanced cam mechanism, and a rectangular container produced by the device or method.

In this embodiment, as an example, as illustrated in Fig. 1A to Fig. 1E, a drawn article 100 being a rectangular container having an oblong shape in transverse cross section parallel to a bottom surface 101 of a rectangular container 100 (transverse cross section orthogonal to a drawing direction (moving direction of a slide of a press machine)) is cut at the vicinity of an upper edge portion on an opening end side in transverse cross section.

That is, as illustrated in Fig. 1B to Fig. 1E, in the trimming device and method for a rectangular container according to this embodiment, the drawn article 100 produced (formed) by drawing is trimmed along a trim line 100A, and a scrap 100C is separated to produce a product (drawn product) 100B. Side walls along short sides are denoted by reference symbols 102A and 102B, and side walls along long sides are denoted by reference symbols 103A and 103B.

As an example of the rectangular container 100 according to this embodiment, there is given, for example, a hollow container with an open upper surface obtained by drawing an aluminum alloy having a plate thickness of about 1 mm, for example, a hollow container having the short sides 102A and 102B of from several tens of mm to several hundreds of mm (for example, about 40 mm), the long sides 103A and 103B of from several tens of mm to several hundreds of mm (for example, about 300 mm), and the depth of from several tens of mm to several hundreds of mm (for example, from about 60 mm to about 100 mm), in which the thickness of the bottom surface 101 or each side wall (the short sides 102A and 102B and the long sides 103A and 103B) is from about 0.5 mm to about 1.2 mm. The present invention is not limited to these dimensions.

The rectangular container 100 according to this embodiment corresponds to an example of "a rectangular container having one end opened and a bottom portion at the other end and having a transverse cross-sectional shape parallel to a bottom surface being a rectangular shape" according to the present invention.

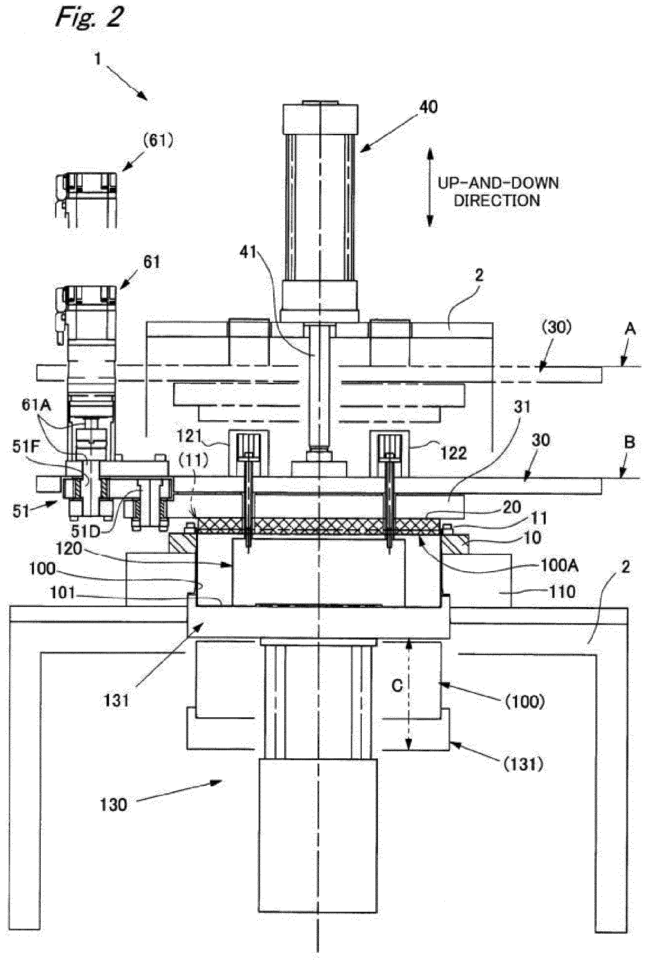

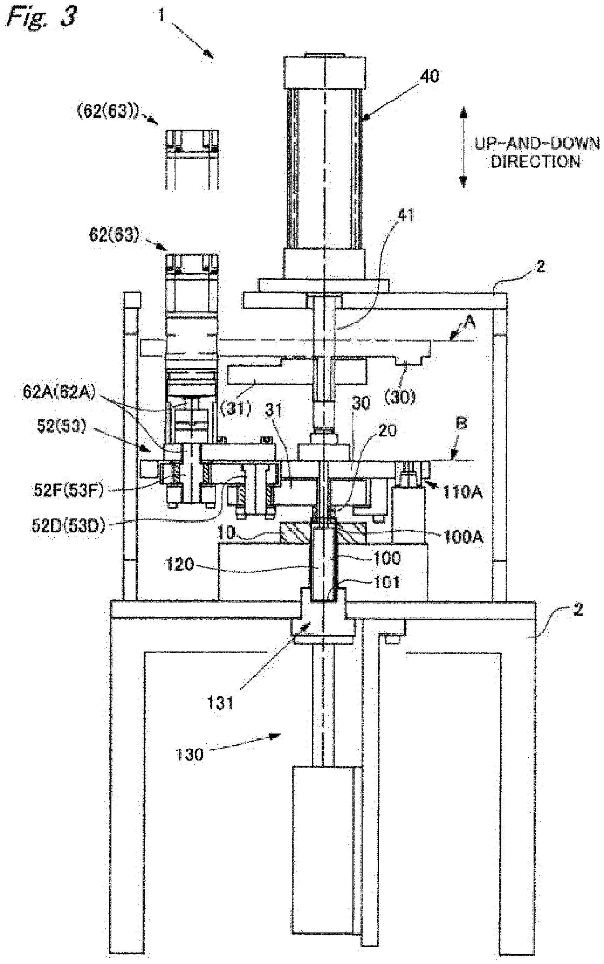

Fig. 2 is a front view of a trimming device 1 according to this embodiment. Fig. 3 is a right side view thereof. As illustrated in Fig. 2 and Fig. 3, in the trimming device 1, the drawn article 100 being the rectangular container is held such that an outer peripheral surface thereof is in contact with an inner peripheral surface of a die 10. The die 10 is integrally supported on a base portion 110 integrally supported on a device frame 2. Further, on the die 10, there is provided a V protruding die 11 that recesses the upper edge portion (portion to be the scrap 100C), of the drawn article 100 above the trim line 100A in a V groove shape extending substantially perpendicularly (longitudinally), up to the trim line 100A (see Fig. 1A, Fig. 1B, and Fig. 2).

A punch 20 that performs trimming processing on the drawn article 100 in corporation with the die 10 is supported on a punch holder 30, and the punch holder 30 is coupled to a cylinder 40 that is an example of a linear motor actuator, and is supported on a shaft 41 that is moved in a raising and lowering direction (up-and-down direction). The cylinder 40 is integrally supported on the device frame 2.

The punch holder 30 is lowered by the cylinder 40 from an initial position A to a trimming work position B in Fig. 2 and Fig. 3, and along therewith, the punch 20 provided integrally with the punch holder 30 is inserted to the inside of the drawn article 100 accommodated inside the die 10, to be brought to a trimming position. An outer periphery of the punch 20 is provided at a predetermined gap (clearance) from an inner side wall of the drawn article 100 over an entire periphery. A positioning pin is denoted by reference symbol 110A, and the positioning pin performs positioning between the punch holder 30, and therefore, the punch 20 and the base portion 110, and therefore, the die 10 in a height direction and a horizontal direction. A plurality of positioning pins 110A may also be provided.

There may be provided a holding plate 120 that is inserted to the inside of the drawn article 100 accommodated inside the die 10, and presses, together with a support base 131, the bottom surface 101 of the drawn article 100 with predetermined pressing forces of elastic biasing elements 121 and 122 to suppress deformation at the time of trimming processing. The holding plate 120 is supported on the punch holder 30 through intermediation of the elastic biasing elements 121 and 122, and is moved up and down at the time of carrying in and out of the drawn article 100 in accordance with up-down movement of the shaft 41 by the cylinder 40 in a range of from the initial position A to the trimming work position B.

The support base 131 is coupled to a cylinder mechanism 130 that is a linear-motion mechanism, and is moved up and down in a range indicated by the arrows denoted by reference symbol C in Fig. 2 at the time of carrying in and out of the drawn article 100.

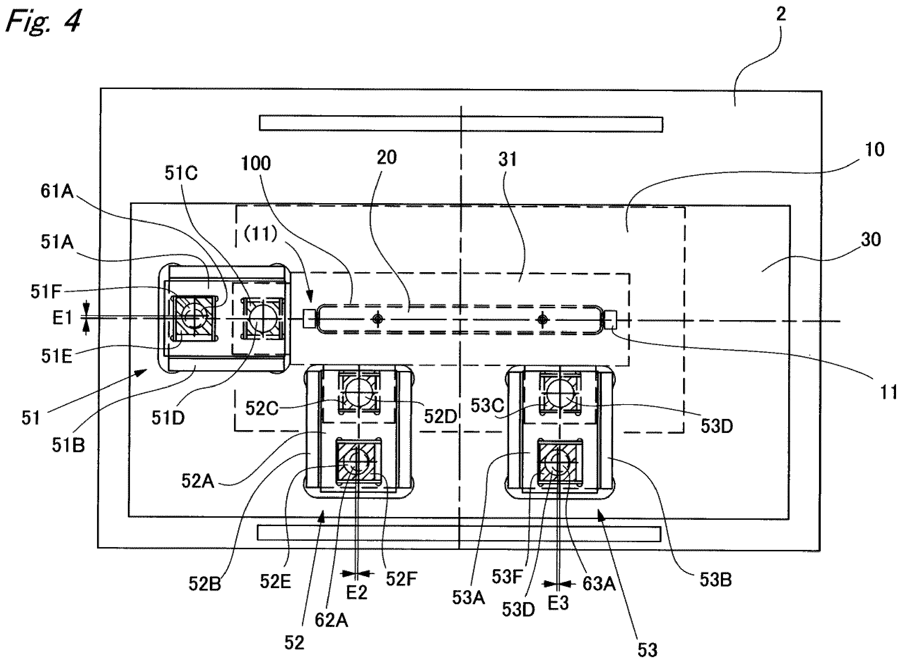

The punch holder 30 supports a slide plate 31 so as to be slidable (movable) within a horizontal plane (plane orthogonal to the plane of Fig. 2 and Fig. 3 and extending along the right-and-left direction: plane of Fig. 4), and the punch 20 is supported (mounted) on the slide plate 31 in a fixed manner. Thus, the punch 20 is configured to be movable within the horizontal plane relative to the die 10 and the drawn article 100 integrally supported on the trimming device 1.

In this embodiment, as illustrated in Fig. 4, the slide plate 31 is supported so as to be movable within the horizontal plane relative to the punch holder 30 through intermediation of a long-axis direction slider 51, a first short-axis direction slider 52, and a second short-axis direction slider 53. The long-axis direction slider 51 allows only movement of the punch 20 in a long-axis direction. The first short-axis direction slider 52 allows only movement of the punch 20 in a short-axis direction. The second short-axis direction slider 53 that is arranged at a predetermined interval from the first short-axis direction slider 52 in the long-axis direction of the punch 20, and allows only movement of the punch 20 in the short-axis direction.

In this embodiment, the "long-axis direction" refers to a long-axis direction of the punch 20 or the drawn article 100 (right-and-left direction in Fig. 4) in the plane of Fig. 4, the "short-axis direction" refers to a short-axis direction of the punch 20 or the drawn article 100 (up-and-down direction of Fig. 4) in the plane of Fig. 4, and the "perpendicular axis" refers to a drawing direction (axis perpendicular to the plane of Fig. 4).

The long-axis direction slider 51, the first short-axis direction slider 52, and the second short-axis direction slider 53 have the same basic configuration, but the arrangement positions are different from each other. The long-axis direction slider 51 in this embodiment is arranged at a left end portion of the slide plate 31 in Fig. 4, and includes a slide element 51A and a guide 51B. The slide element 51A is movable only in the long-axis direction. The guide 51B engages with the slide element 51A to support the slide element 51A while guiding the slide element 51A so as to be movable only in the long-axis direction.

On a side of the slide element 51A on a proximal side of the punch 20, a slider 51C is supported so as to be movable relative to the slide element 51A only in the short-axis direction. A shaft 51D coupled to the slide plate 31 is supported on the slider 51C so as to be rotatable about the perpendicular axis.

Thus, the shaft 51D integrated with the slide plate 31 and the punch 20 supported thereon is coupled to (supported on) the slide element 51A through intermediation of the slider 51C so as to be rotatable about the axial center and movable in the short-axis direction.

Further, on a side of the slide element 51A on a distal side of the punch 20, a slider 51E is supported relative to the slide element 51A so as to be movable only in the short-axis direction. On the slider 51E, an eccentric shaft (decentering shaft) 51F coupled to an output rotation shaft of a long-axis direction drive unit 61 with a predetermined eccentricity amount E1 is supported so as to be rotatable about the perpendicular axis. Thus, the eccentric shaft 51F rotatably coupled to an output rotation shaft 61A of the long-axis direction drive unit 61 is coupled to (supported on) the slide element 51A through intermediation of the slider 51E so as to be rotatable about the axial center and movable in the short-axis direction.

Thus, when the long-axis direction drive unit 61 is driven to rotate the output rotation shaft 61A in a predetermined direction, the eccentric shaft 51F rotates eccentrically so that the slider 51E is moved in the long-axis direction. Then, the slide element 51A is moved in the long-axis direction through intermediation of the slider 51E, and therefore, the slide plate 31 is moved in the long-axis direction through intermediation of the shaft 51D so as to be rotatable about the shaft 51D.

The first short-axis direction slider 52 in this embodiment is arranged at a lower end portion of the slide plate 31 and at a position relatively close to the long-axis direction slider 51 in Fig. 4, and includes a slide element 52A and a guide 52B. The slide element 52A is movable only in the short-axis direction. The guide 52B engages with the slide element 52A to support the slide element 52A while guiding the slide element 52A so as to be movable only in the short-axis direction.

On a side of the slide element 52A on a proximal side of the punch 20, a slider 52C is supported so as to be movable relative to the slide element 52A only in the long-axis direction. The shaft 52D coupled to the slide plate 31 is supported on the slider 52C so as to be rotatable about the perpendicular axis. Thus, the shaft 52D integrated with the slide plate 31 and the punch 20 supported thereon is coupled to (supported on) the slide element 52A through intermediation of the slider 52C so as to be rotatable about the axial center and movable in the long-axis direction.

Further, on a side of the slide element 52A on a distal side of the punch 20, a slider 52E is supported relative to the slide element 52A so as to be movable only in the short-axis direction. On the slider 52E, an eccentric shaft 52F coupled to an output rotation shaft of a first short-axis direction drive unit 62 with a predetermined eccentricity amount E2 is supported so as to be rotatable about the perpendicular axis.

Thus, the eccentric shaft 52F rotatably coupled to an output rotation shaft 62A of the first short-axis direction drive unit 62 is coupled to (supported on) the slide element 52A through intermediation of the slider 52E so as to be rotatable about the axial center and movable in the short-axis direction.

Thus, when the first short-axis direction drive unit 62 is driven to rotate the output rotation shaft 62A in a predetermined direction, the eccentric shaft 52F rotates eccentrically so that the slider 52E is moved in the short-axis direction. Then, the slide element 52A is moved in the short-axis direction through intermediation of the slider 52E, and therefore, the slide plate 31 is moved in the short-axis direction through intermediation of the shaft 52D so as to be rotatable about the shaft 52D.

The second short-axis direction slider 53 in this embodiment is different from the first short-axis direction slider 52 in that, regarding the arrangement position, the second short-axis direction slider 53 is arranged at the lower end portion of the slide plate 31 and at a position relatively farther from the long-axis direction slider 51 in Fig. 4, and that an eccentric shaft 53F is coupled to an output rotation shaft 63A of a second short-axis direction drive unit 63 with a predetermined eccentricity amount E3, but other configurations are the same, and detailed description thereof is therefore omitted herein.

Thus, when the second short-axis direction drive unit 63 is driven to rotate the output rotation shaft 63A in a predetermined direction, the eccentric shaft 53F rotates eccentrically so that the slider 53E is moved in the short-axis direction. Then, the slide element 53A is moved in the short-axis direction through intermediation of the slider 53E, and therefore, the slide plate 31 is moved in the short-axis direction through intermediation of the shaft 53D so as to be rotatable about the shaft 53D.

That is, the trimming device 1 according to this embodiment supports the slide plate 31, and therefore, the punch 20 within a plane orthogonal to the depth direction of the drawn article 100 (for example, within a horizontal plane) so as to be movable relative to the device main body, and the slide plate 31, and therefore, the punch 20 are moved within the plane by the three drive units (for example, the long-axis direction drive unit 61, the first short-axis direction drive unit 62, and the second short-axis direction drive unit 63), to thereby trim the upper edge portion of the drawn article 100.

The predetermined eccentricity amounts E1, E2, and E3 may be set such that all have the same value, at least one has a different value, or all have different values depending on the specifications of the drawn article 100 or other demands.

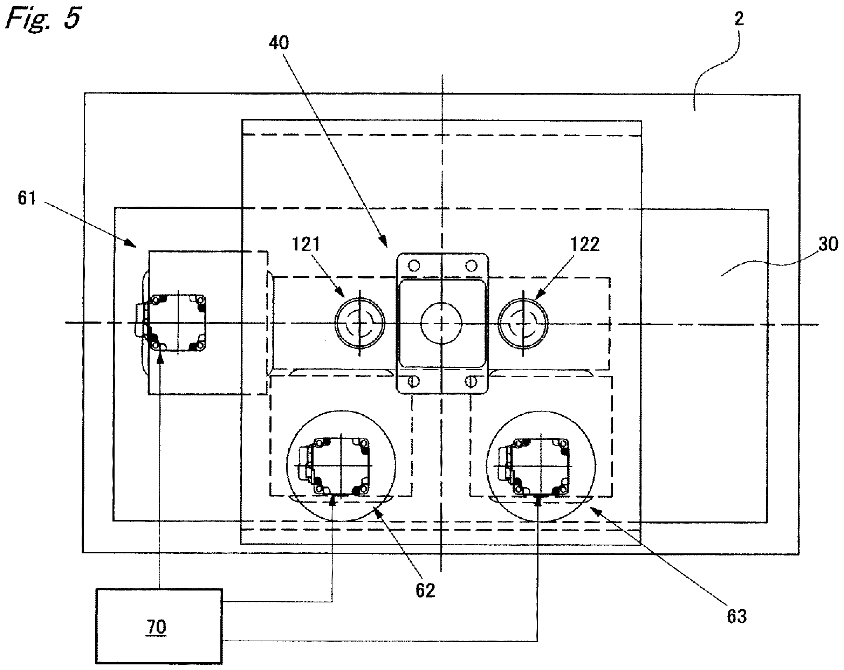

Further, the long-axis direction drive unit 61, the first short-axis direction drive unit 62, and the second short-axis direction drive unit 63 may be, for example, electric motors such as servomotors, or further, may be hydraulic motors. The drive of the long-axis direction drive unit 61, the first short-axis direction drive unit 62, and the second short-axis direction drive unit 63 is controlled by a controller 70 included in the trimming device 1 independently of each other (see Fig. 5).

In this embodiment, the trimming processing is to be performed on the drawn article 100 by using the trimming device 1 having such a configuration, following STEPs (also referred to as "steps") as described below.

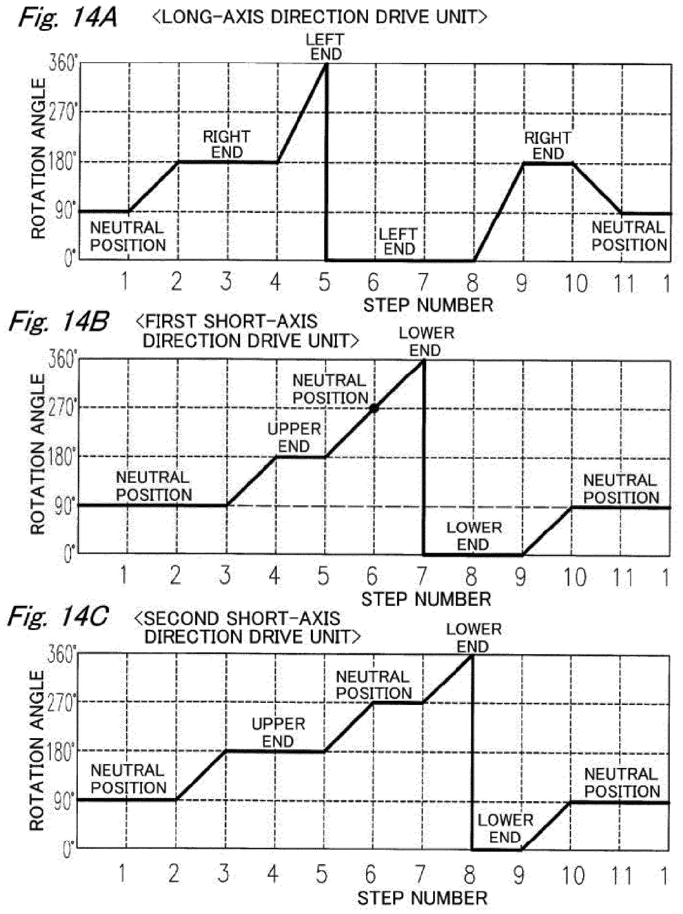

Rotation angle positions (drive states: positions of the punch 20) of the electric motors of the long-axis direction drive unit 61, the first short-axis direction drive unit 62, and the second short-axis direction drive unit 63 in STEPs (steps) below are shown in the timing charts of Fig. 14A to Fig. 14C. The numbers in the horizontal axis in Fig. 14A to Fig. 14C correspond to the number (numbers) of STEPs (steps) below.

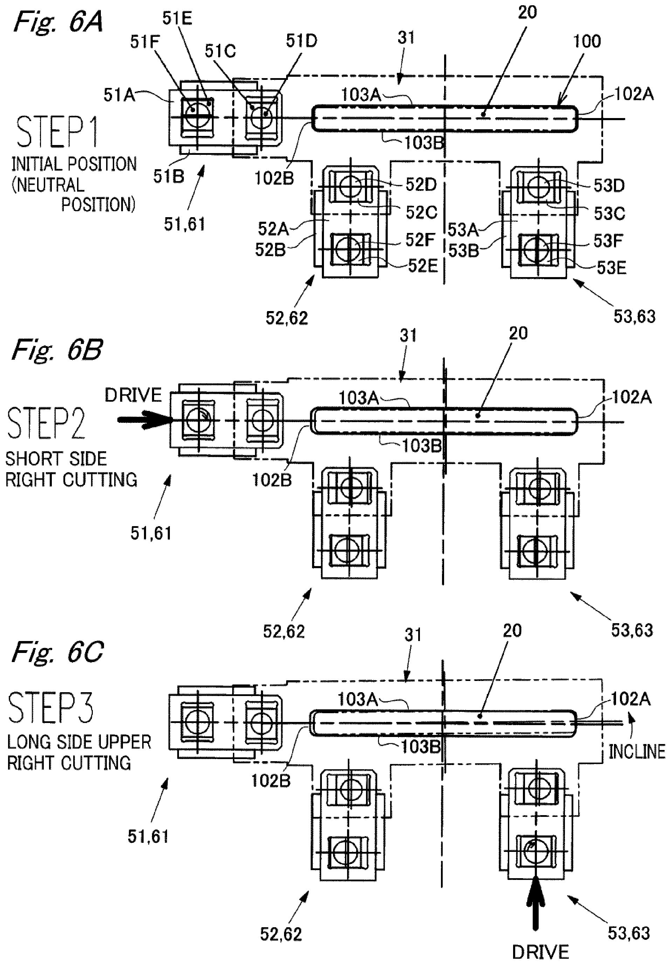

In each of Fig. 14A to Fig. 14C, the rotation angle position of the long-axis direction drive unit 61 corresponds to a rotation angle position of the eccentric shaft 51D, the position at the rotation angle 90°(270°) corresponds to a neutral position in a direction in which the punch 20 extends along the long-axis direction of the drawn article 100, the position at the rotation angle 180° corresponds to a position of a right end in Fig. 6A to Fig. 6C or the like in a direction in which the punch 20 extends along the long-axis direction of the drawn article 100, and the position at the rotation angle 360°(0°) corresponds to a position of a left end in Fig. 6A to Fig. 6C or the like in a direction in which the punch 20 extends along the long-axis direction of the drawn article 100.

Further, the rotation angle positions of the first short-axis direction drive unit 62 and the second short-axis direction drive unit 63 correspond to rotation angle positions of the eccentric shafts 52D and 53D, respectively, the position at the rotation angle 90°(270°) corresponds to a neutral position in a direction in which the punch 20 extends along the short-axis direction of the drawn article 100, the position at the rotation angle 180° corresponds to a position of an upper end in Fig. 6A to Fig. 6C or the like in a direction in which the punch 20 extends along the short-axis direction of the drawn article 100, and the position at the rotation angle 360°(0°) corresponds to a position of a lower end in Fig. 6A to Fig. 6C or the like in a direction in which the punch 20 extends along the short-axis direction of the drawn article 100.

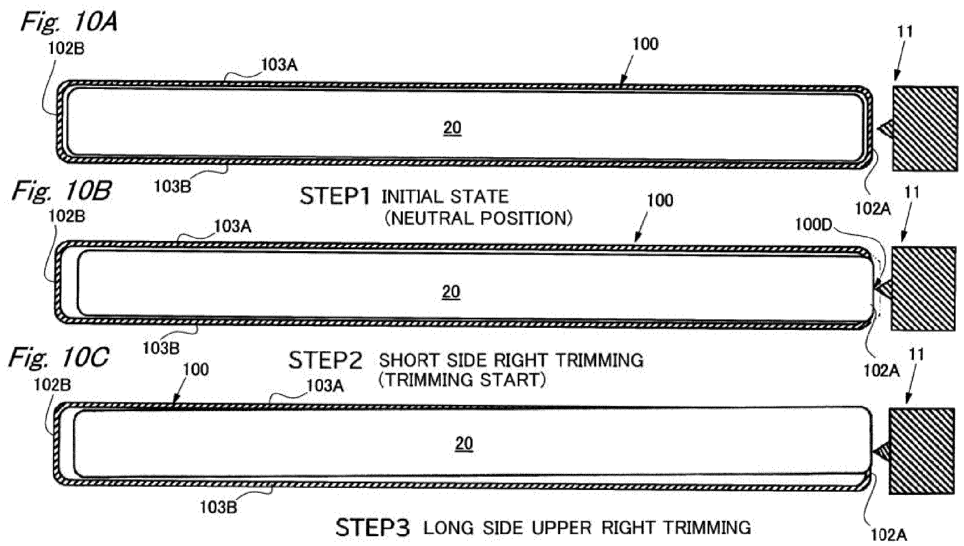

Step 1 is now described with reference to the Figs. 6A and 10A. First, the long-axis direction drive unit 61, the first short-axis direction drive unit 62, and the second short-axis direction drive unit 63 are set at an initial position (neutral position) (state in which a predetermined gap is secured between the outer periphery of the punch 20 and the inner side wall of the drawn article 100 at the initial position A) as an initial state.

Step 2 of trimming of right short side is now described with reference to the Figs. 6B and 10B. From the state of step 1, the long-axis direction drive unit 61 is driven to move the slide plate 31, and therefore, the punch 20 to the right side in the long-axis direction in Fig. 6B and Fig. 10B so that a short side 102A portion on the right side is trimmed (cut) (or formed with a cutline) along the trim line 100A by the punch 20 of the drawn article 100 in Fig. 6B and Fig. 10B. However, trimming is performed by moving the punch 20 inserted to the inside of the drawn article 100, from a direction substantially orthogonal to the short side 102A. Thus, portions corresponding to the thicknesses of the long sides 103A and 103B on the upper side and the lower side that are connected to the short side 102A in Fig. 6B and Fig. 10B are not trimmed. The first short-axis direction drive unit 62 and the second short-axis direction drive unit 63 are maintained in the states of step 1 (see Fig. 14A to Fig. 14C).

Further, when the trimming processing (punch 20) progresses, by utilizing the movement of the punch 20, a part of an outer peripheral side of the short side 102A of the drawn article 100 to be the scrap 100C, which is above the trim line 100A, is recessed into a perpendicular groove shape (a recessed portion may be formed before trimming) by the V protruding die 11 installed on the die 10 to form a thin portion (weak portion) 100D having a tensile strength weaker than that of the other side wall portion (portion to be the scrap 100C). With this, the thin portion is actively deformed (broken) in the process of trimming, and forced deformation which may be generated in the portion to be the scrap 100C during trimming is eliminated. Thus, a fear in that the portion to be the scrap 100C affects the product 100B side during the trimming processing can be suppressed, thereby being capable of suppressing deformation of the drawn article 100 during the trimming processing.

Here, the V protruding die 11 corresponds to an example of a weak portion forming portion in the present invention. The weak portion forming portion is not limited thereto, and is only required to form a portion having a tensile strength weaker than that of the other side wall portion (portion to be the scrap 100C), and the configuration, the shape, the thickness, the size, and the like are not particularly limited. It is desired that the punch 20 and the V protruding die 11 be not in direct contact with each other in order to suppress abrasion, damage, or the like.

Step 3 of right trimming of upper long side is now described with reference to the Figs. 6C and 10C. In step 3, the second short-axis direction drive unit 63 is driven to move the right side in Fig. 6C and Fig. 10C of the punch 20 toward the upper side (the long side 103A side on the upper side of the drawn article 100 in Fig. 6C and Fig. 10C) from the position or the state of the punch 20 that has ended the trimming of step 2, and an uncut portion of the upper side of the short side 102A on the right side of the drawn article 100 and the right side portion of the long side 103A are trimmed by the punch 20 along the trim line 100A. The long-axis direction drive unit 61 and the first short-axis direction drive unit 62 are maintained in the states of step 2 (see Fig. 14A to Fig. 14C).

Only the second short-axis direction drive unit 63 is moved so that the punch 20 is rotated about the shaft 51D, and is inclined with respect to the long side 103A of the drawn article 100 to perform trimming, thereby being capable of suppressing a cutting load to be small. In addition, the thin portion (weak portion) 100D having a weak strength has been formed in advance on the scrap 100C side. Thus, it is possible to suppress the scrap 100C side from being deformed (broken) to affect the drawn article 100 (product 100B) side due to the deformation of the scrap 100C side at the time of trimming, and subsequent trimming processing can be progressed without deformation of the drawn article 100 (product 100B) itself.

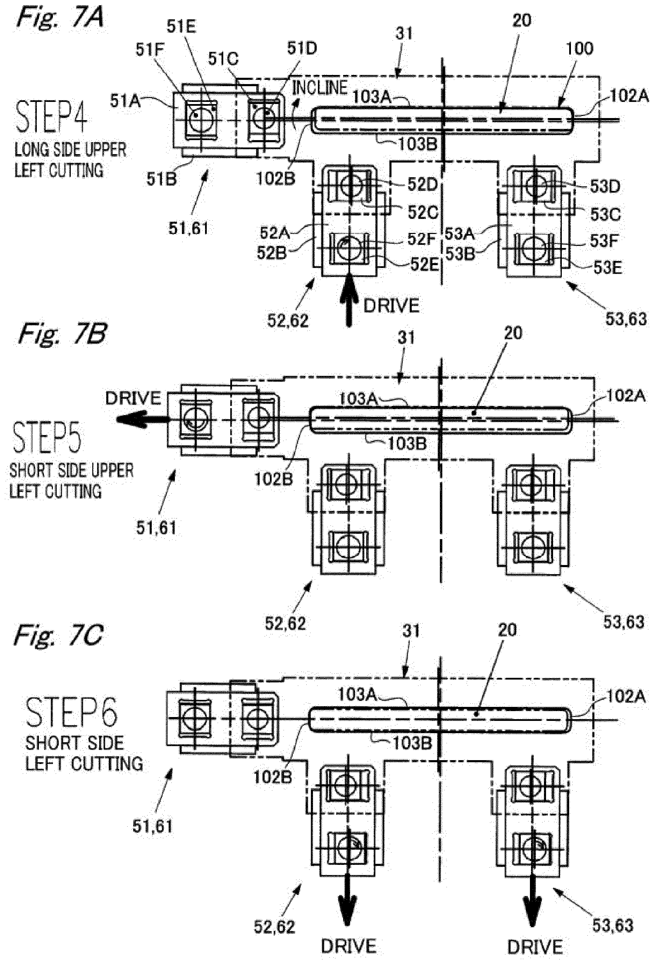

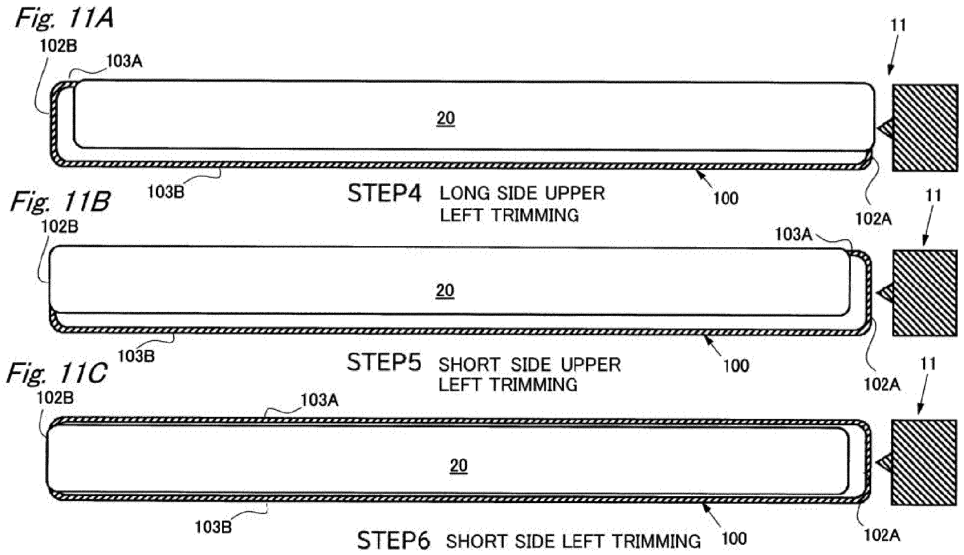

Step 4 of left trimming of upper long side is now described with reference to the Figs. 7A and 11A. In step 4, the first short-axis direction drive unit 62 is driven to move the left side in Fig. 7A and Fig. 11A of the punch 20 toward the upper side (the long side 103A side on the upper side of the drawn article 100 in Fig. 7A and Fig. 11A) from the position or the state of the punch 20 that has ended the trimming of step 3, and an uncut portion (left side portion) of the upper side of the long side 103A on the upper side of the drawn article 100 in Fig. 7A and Fig. 11A is trimmed by the punch 20 along the trim line 100A. The long-axis direction drive unit 61 and the second short-axis direction drive unit 63 are maintained in the states of step 3 (see Fig. 14A to Fig. 14C).

Only the first short-axis direction drive unit 62 is moved so that the punch 20 is rotated about the shaft 53D and an uncut portion (left side portion) of the long side 103A on the upper side in Fig. 7A and Fig. 11A is trimmed while returning the punch 20 from the state inclined with respect to the long side 103A of the drawn article 100 to a state of being parallel to the long-axis direction (long side 103A), thereby being capable of suppressing a cutting load to be small.

Step 5 of trimming of upper side of left short side is now described with reference to the Figs. 7B and 11B. In step 5, the long-axis direction drive unit 61 is driven to move the punch 20 toward a side (left side in Fig. 7B and Fig. 11B) opposite to that in step 2 from the position or the state of the punch 20 that has ended the trimming of step 4, to thereby perform trimming processing on the short side 102B on the other side (short side on the left side in Fig. 7B and Fig. 11B) along the trim line 100A. However, the trimming is performed while moving the punch 20 inserted to the inside of the drawn article 100 from a direction substantially orthogonal to the short side 102B. Thus, in the vicinity of the connecting portion with the long side 103B on the lower side of the short side 102B in Fig. 7B and Fig. 11B, a portion corresponding to the thickness of the long side 103B on the lower side and a portion corresponding to the thickness of the long side 102A on the upper side. The first short-axis direction drive unit 62 and the second short-axis direction drive unit 63 are maintained in the states of step 4 (see Fig. 14A to Fig. 14C).

Further, at this time, as in step 2, by utilizing the movement of the punch 20, a part of an outer peripheral side of the short side 102B on the left side of the drawn article 100 to be the scrap 100C, which is above the trim line 100A, may be recessed into a perpendicular groove shape (a recessed portion may be formed before trimming) to form a thin portion (weak portion) 100D having a tensile strength weaker than that of the other side wall portion (portion to be the scrap 100C).

In this case, along with the progress of the trimming following the step, the thin portion of the scrap 100C can be broken to be divided into two parts. Thus, deformation of the drawn article 100 (product 100B) can be further suppressed. In addition, the scrap 100C can be divided into two parts so that handling thereof becomes easier. Accordingly, an operation relating to scrap processing (for example, taking out and carrying out from the device) can be easily and smoothly performed, thereby being capable of contributing to improvement in production efficiency.

Step 6 of trimming of lower side of left short side is now described with reference to the Figs. 7C and 11C. In step 6, the first short-axis direction drive unit 62 and the second short-axis direction drive unit 63 are driven to move the punch 20 in parallel toward the lower side in Fig. 7C and Fig. 11C from the position or the state of the punch 20 that has ended the trimming of step 5 and move the punch 20 toward the neutral position (long side neutral position) in the up-and-down direction, to thereby trim an uncut portion of the short side 102B on the left side of the drawn article 100 in Fig. 7C and Fig. 11C.

However, trimming is performed by moving the punch 20 inserted to the inside of the drawn article 100 from a direction substantially orthogonal to the short side. Thus, a portion corresponding to the thickness of the long side 103B on the lower side connected to the short side in Fig. 7C and Fig. 11C is not trimmed. The long-axis direction drive unit 61 is maintained in the state of step 5 (see Fig. 14A to Fig. 14C).

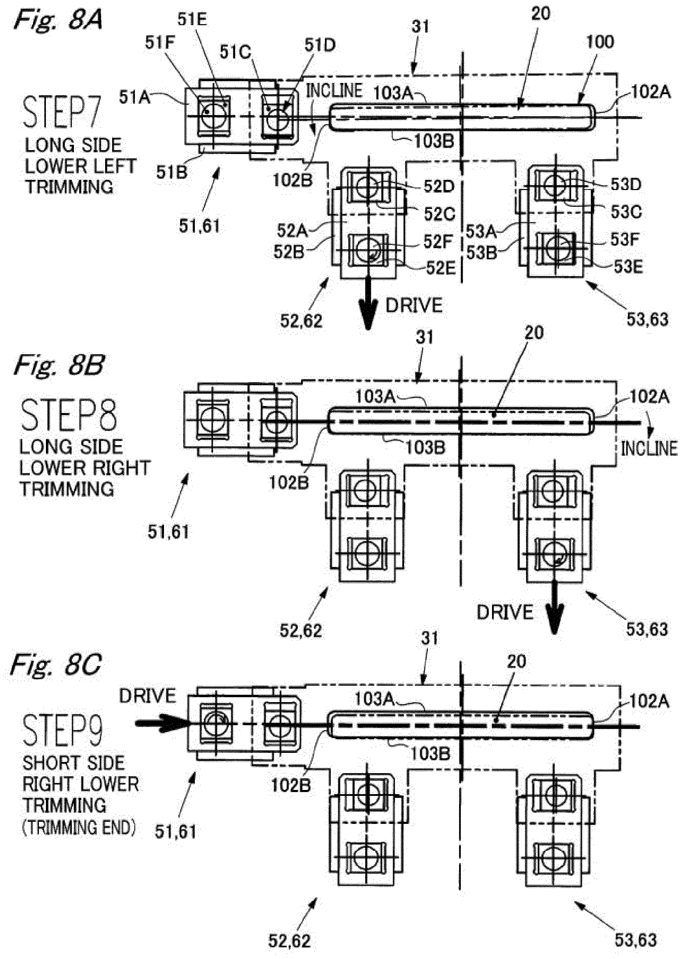

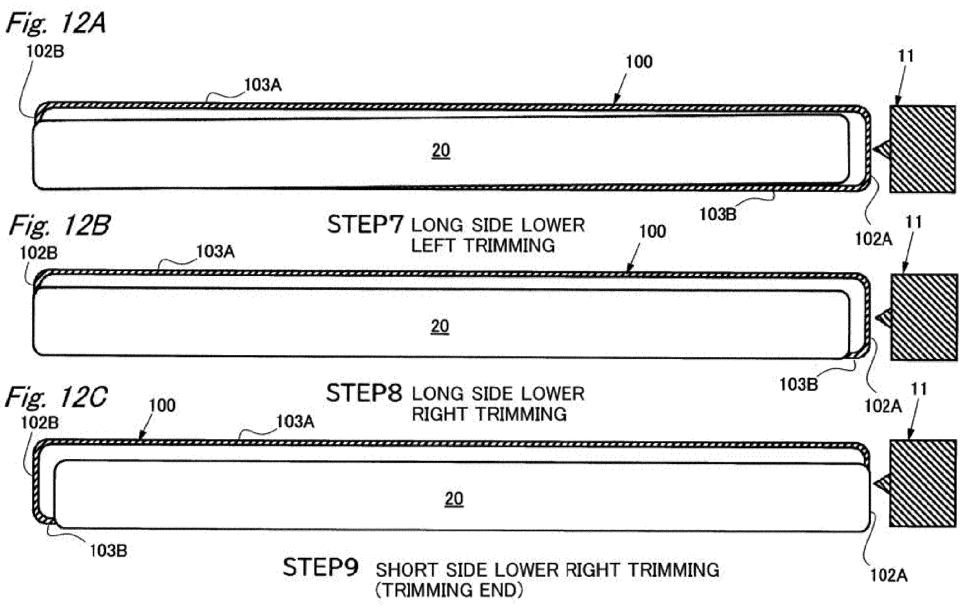

Step 7 of left trimming of lower long side is now described with reference to the Figs. 8A and 12A. In step 7, the first short-axis direction drive unit 62 is driven to move the left side in Fig. 8A and Fig. 12A of the punch 20 toward the lower side (the long side 103B side on the lower side of the drawn article 100 in Fig. 8A and Fig. 12A) from the position or the state of the punch 20 that has ended the trimming of step 6, and an uncut portion of the lower side of the short side 102B on the left side of the drawn article 100 in Fig. 8A and Fig. 12A and the left side portion of the long side 103B on the lower side thereof are trimmed by the punch 20 along the trim line 100A. The long-axis direction drive unit 61 and the second short-axis direction drive unit 63 are maintained in the states of step 6 (see Fig. 14A to Fig. 14C).

Also in the step, similarly to step 4, trimming is performed while moving only the first short-axis direction drive unit 62 to incline the punch 20, thereby being capable of suppressing a cutting load to be small.

Step 8 of right trimming of lower long side is now described with reference to the Figs. 8B and 12B. In step 8, the second short-axis direction drive unit 63 is driven to move the right side in Fig. 8B and Fig. 12B of the slide plate 31, and therefore, the punch 20 toward the lower side (the long side 103B side on the lower side of the drawn article 100 in Fig. 8B and Fig. 12B) from the position or the state of the punch 20 that has ended the trimming of step 7, and an uncut portion (right side portion) of the short side 103B on the lower side of the drawn article 100 in Fig. 8B and Fig. 12B is trimmed by the punch 20 along the trim line 100A. The long-axis direction drive unit 61 and the first short-axis direction drive unit 62 are maintained in the states of step 7 (see Fig. 14A to Fig. 14C).

Also in the step, similarly to step 3, trimming is performed while moving only the second short-axis direction drive unit 63 to return the punch 20 from the inclined state to the state of being parallel to the long-axis direction (long side 103B), thereby being capable of suppressing a cutting load to be small.

Step 9 of lower trimming of right short side is now described with reference to the Figs. 8C and 12C. In step 9, the long-axis direction drive unit 61 is driven so as to move the punch 20 toward the right side in Fig. 8C and Fig. 12C from the position or the state of the punch 20 that has ended the trimming of step 8, to thereby perform trimming processing on the lower side portion (uncut portion in step 2) of the short side 102A on the right side in Fig. 8C and Fig. 12C along the trim line 100A. The first short-axis direction drive unit 62 and the second short-axis direction drive unit 63 are maintained in the states of step 8 (see Fig. 14A to Fig. 14C).

With this, processing of trimming the upper edge portion of the drawn article 100 along the trim line 100A for one lap is completed, and the scrap 100C is cut and separated from the drawn article 100 to produce the product 100B.

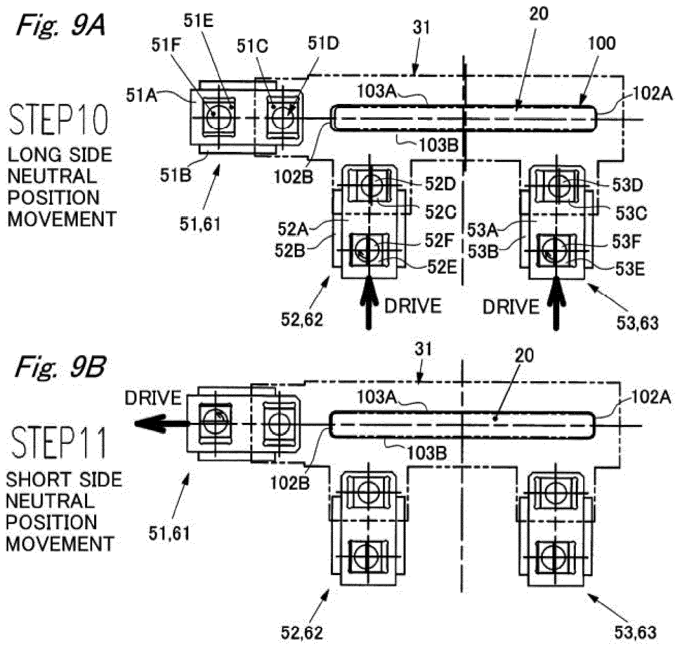

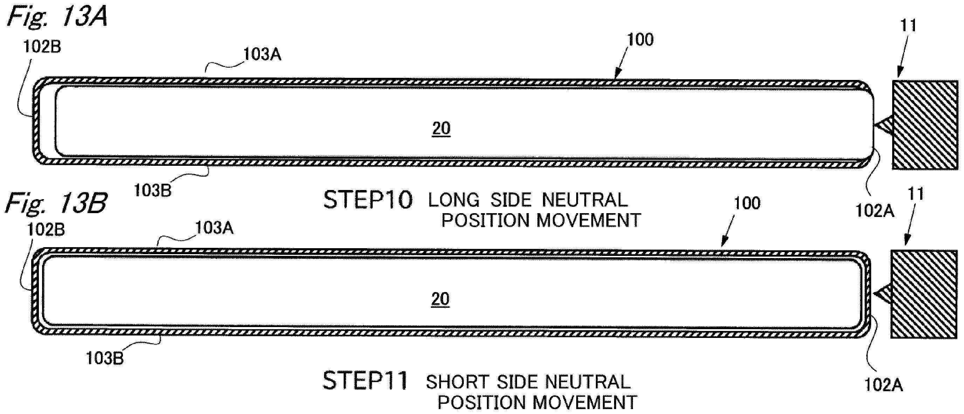

Step 10 is now described with reference to the Figs. 9A and 13A. In step 10, the first short-axis direction drive unit 62 and the second short-axis direction drive unit 63 are driven to move the slide plate 31, and therefore, the punch 20 toward the upper side in Fig. 9A and Fig. 13A from the position or the state of the punch 20 that has ended the trimming of step 9 and move the punch 20 toward the neutral position (long side neutral position) in the up-and-down direction. The long-axis direction drive unit 61 is maintained in the state of step 9 (see Fig. 14A to Fig. 14C).

Step 11 is now described with reference to the Figs. 9B and 13B. In step 11, the long-axis direction drive unit 61 is driven to move the punch 20 toward the left side in Fig. 9B and Fig. 13B from the position or the state of the punch 20 that has ended step 10 and move the punch 20 to a neutral position (short side neutral position) in the right-and-left direction for next trimming processing to return the punch 20 to the initial position (neutral position), to thereby end the current trimming processing. The first short-axis direction drive unit 62 and the second short-axis direction drive unit 63 are maintained in the states of step 10 (see Fig. 14A to Fig. 14C).

As described above, in this embodiment, the trimming device 1 includes the three drive units (the long-axis direction drive unit 61, the first short-axis direction drive unit 62, and the second short-axis direction drive unit 63). The short side 102A side with a relatively small cutting load of the drawn article 100 is trimmed first by the long-axis direction drive unit 61 by using the punch 20, the punch 20 is moved by the second short-axis direction drive unit 63 to start trimming on the long side 103A of the drawn article 100 from the short side 102A side toward the short side 102B on the opposite side while inclining the punch 20 so as to continuously form the trimmed portion, at a timing at which the trimming progresses by an predetermined amount, the punch 20 is moved by the first short-axis direction drive unit 62 to return the punch 20 from the inclined state to a state of being parallel to the long-axis direction (long side 103A), and simultaneously, the trimming of the long side 103A is progressed to the short side 102B on the opposite side, to thereby complete the trimming of the long side 103A on one side.

After that, the punch 20 is moved by the long-axis direction drive unit 61 to trim the short side 102B of the drawn article 100 on the opposite side so as to continuously form the trimmed portion, and the first short-axis direction drive unit 62 and the second short-axis direction drive unit 63 are simultaneously driven to move the punch 20 in parallel toward the long side 103B side to trim an uncut portion of the short side 102B.

Then, the punch 20 is moved by the first short-axis direction drive unit 62 to perform trimming on the long side 103B of the drawn article 100 on the other side from the short side 102B side on the closer side toward the short side 102A on the opposite side while inclining the punch 20 so as to continuously form the trimmed portion, at a timing at which the trimming progresses by an predetermined amount, the punch 20 is moved by the second short-axis direction drive unit 63 to return the punch 20 from the inclined state to a state of being parallel to the long-axis direction (long side 103B), and simultaneously, the trimming of the long side 103B is progressed to the short side 102A on the opposite side, to thereby complete the trimming of the long side 103B on the other side. In addition, the punch 20 is moved by the long-axis direction drive unit 61 to trim an uncut portion (remaining portion) of the short side of the drawn article 100 on the opposite side so as to continuously form the trimmed portion, the upper edge portion of the drawn article 100 is trimmed for one lap along a trim line 100A, and thus, the scrap 100C is separated to produce the product 100B, thereby completing the trimming processing on one drawn article 100.

Thus, according to this embodiment, the trimming processing is performed by moving the punch 20 that is performing trimming through the three drive units so as to continuously form the trimmed portion without pulling out the punch 20 from the trimmed portion, thereby being capable of contributing to high-quality trimming processing in which a matching burr or the like is less liable to occur.

Further, according to this embodiment, the short side with a relatively small cutting load of the drawn article 100 is trimmed first using the punch 20. Thus, as compared to a case in which trimming is performed from the long side, the performance (or capacity) of the drive unit for a short side (long-axis direction drive unit 61) can be reduced, thereby being capable of contributing to reduction in size and weight of the device, and therefore, being capable of contributing to, for example, reduction in cost and improvement in degree of freedom of the layout.

When the short side is trimmed first using the punch 20, as compared with a case in which the long side is trimmed first, a cutting load can be reduced, thereby being capable of suppressing deformation of the drawn article 100, and therefore, being capable of contributing to production of high-quality product.

Further, according to this embodiment, one of the first short-axis direction drive unit 62 and the second short-axis direction drive unit 63 is moved in the order to incline the punch 20 with respect to the long side of the drawn article 100 and trim the long side of the drawn article 100, thereby being capable of suppressing a cutting load to be small. Thus, performance (or capacity) of the first short-axis direction drive unit 62 and the second short-axis direction drive unit 63 can be reduced, thereby being capable of contributing to reduction in size and weight of the device, and therefore, being capable of contributing to, for example, reduction in cost and improvement in degree of freedom of the layout. The punch 20 is inclined with respect to the long side of the drawn article 100, and the long side of the drawn article 100 is trimmed to suppress a cutting load to be small. Thus, deformation of the drawn article 100 can be suppressed, thereby being capable of contributing to production of a high-quality product.

Further, the trimming device 1 according to this embodiment is configured to move a punch by a drive source such as a motor independent of a slide of a press machine. As compared to a trimming device having an improved and complicated configuration of using, for example, a so-called staggering cam or a complicated gear mechanism and link mechanism as disclosed in JP 2020 104 122 A, the configuration can be simplified, and an effect of eliminating the need for high-level skill and experience can be given.

Further, in the trimming device 1 according to this embodiment, the motor or the like independent of the movement of the slide of the press machine is used as the drive source, and hence there is no restriction by the movement of the slide of the press machine. Thus, the stroke amount, the timing of trimming, and the operation of the punch can be set with a high degree of freedom, thereby being capable of contributing to provision of a user-friendly device. In particular, the trimming device 1 according to this embodiment can adapt easily even to trimming processing on a drawn article having a shape that is difficult to be trimmed by a trimming device using a so-called staggering cam, that is, a shape that requires a large stroke length of the slide of the press machine (for example, a rectangular transverse cross-sectional shape in which an aspect ratio is relatively large), and a wide variety of drawn articles having different shapes and specifications.

Further, the trimming device 1 according to this embodiment does not require a complicated gear mechanism and link mechanism for converting a rotational motion of the electric motor or the like to a motion of the punch in a circumferential direction unlike the device disclosed in JP 2020 104 122 A, but is configured to control drive of the three drive units (the long-axis direction drive unit 61, the first short-axis direction drive unit 62, and the second short-axis direction drive unit 63) independent of each other. Thus, even when a thickness of a plate or a shape of a rectangular container is changed, the trimming device 1 according to this embodiment can adapt to such cases easily and rapidly. Thus, a troublesome operation that needs time can be made unnecessary, and hence the time for stopping the production line is short, and there is no fear in that the production efficiency is deteriorated.

In addition, the trimming device 1 according to this embodiment does not require a punch having an inclined shape for cutting obliquely at the time of start of trimming, which is formed complicatedly and highly accurately like the device disclosed in JP 2020 104 122 A, thereby being capable of contributing to reduction in running cost of a facility, and therefore, manufacturing cost.

Further, according to this embodiment, as compared to, for example, the device that performs trimming from two directions orthogonal to each other as disclosed in JP 2012 157 959 A, the trimming step is not divided into two steps, and trimming can be performed by a series of motion of the punch (trimming is completed by one punch). Thus, generation of a matching burr can be suppressed, and generation of a shear drop and a burr can be suppressed by only ensuring an appropriate loose clearance.

Further, in this embodiment, with use of the punch having an oblong transverse cross-sectional shape (cross-sectional shape in which two long sides are parallel to each other, and the short sides orthogonal thereto are parallel to each other) which is to be manufactured relatively easily, the long side can be trimmed with an appropriate inclination angle (shear angle). Thus, as compared to a case in which a shear angle is given to the punch shape itself (punch having a parallelogram transverse cross-sectional shape, which is to be manufactured at a high level at high cost), a manufacturing cost of the punch can be suppressed to be low.

That is, according to the present invention, it is possible to provide a trimming device and method for a rectangular container, which are capable of performing high-quality trimming while suppressing, for example, occurrence of a matching burr with a relatively simpler configuration and without requiring skill, an advanced cam mechanism, or the like.

Due to an effect of forming the recessed portion (weak portion) 100D in a longitudinal direction of the short side of the portion to be the scrap 100C, at the time of the trimming processing, the cut scrap 100C is easily broken or deformed. Thus, a fear in that deformation of the scrap 100C during the trimming processing affects the product 100B side is suppressed, and hence deformation of the product 100B can be suppressed, thereby being capable of contributing to production of the high-quality product.

Further, when the recessed portion (weak portion) 100D is provide not only to the short side on one side, but also to the short side on the other side, the scrap 100C can be divided into two parts, thereby facilitating discharge of the scrap to the outside of the trimming device 1. Further, the scrap can be collected small, thereby being capable of also reducing a transportation cost.

The recessed portion (weak portion) 100D may also be formed in at least one of the long sides similarly to the short sides, and in this case, the scrap can be divided into two or more parts, and further, three or more parts, thereby being capable of further contributing to easiness in handling of the scrap and suppression of deformation of the product 100B.

Further, the recessed portion (weak portion) 100D is formed by utilizing the motion of the punch 20 at the time of trimming the short side, and hence the number of steps is not increased, and further, a drive source saltation mechanism for forming the recessed portion (weak portion) 100D is not required separately, thereby being capable of contributing to provision of a trimming device and method in which handling of the scrap is easy and deformation of the product is small while maintaining simplification in configuration and low cost.

Further, in this embodiment, the three drive units are configured to move the punch within a predetermined plane (within a horizontal plane, in this embodiment). Thus, a drive mechanism having a complicated and high-level configuration like a mechanism using a so-called staggering cam, a gear mechanism, or a link mechanism is not required, and further, a punch shape formed complicatedly and highly accurately is not required, thereby being capable of giving an inclination angle (shear angle) to a punch even having a simple punch shape. Thus, a cutting load can be suppressed to be low, thereby being capable of contributing to suppression of deformation of the drawn product. At the same time, a manufacturing cost of the punch cutter can be reduced, and further, the inclination angle (shear angle) can be changed appropriately, thereby being capable of contributing to provision of a device adaptable to a wide variety of drawn products.

Further, in this embodiment, one that can control a position, such as a servomotor, may be employed as a drive source of the drive unit, and in such a case, any appropriate punch stroke or stroke timing can be accurately set and changed without involving a mechanical structure change of a device, in accordance with the shape or the plate thickness of the drawn product, thereby being capable of contributing to provision of a user-friendly trimming device that can perform trimming processing on a wide variety of drawn articles.

In this embodiment, as an example, a case in which all of the stroke lengths (eccentricity amounts) of the eccentric shafts 51D, 52D, and 53D are used at the time of trimming (rotation of 360°) has been described, but the present invention is not limited thereto. One that can control a rotation angle (rotation position) freely and highly accurately, such as a servomotor, may be employed as a drive source, and in such a case, each of the eccentric shafts 51D, 52D, and 53D is reversely rotated at the middle without being rotated once, thereby being capable of setting the stroke length of the punch 20 in the long-axis direction and the short-axis direction with a higher degree of freedom in accordance with the specifications of the product.

Further, in the illustration of the timing charts of Fig. 14A to Fig. 14C, the three corresponding respective direction drive units are operated for respective steps, but an operation of each shaft may be overlapped freely selectively so that a next step is started before a previous step is completed.

For example, in step 2, the first short-axis direction drive unit 62 may also be set to start the operation of step 3 when the rotation angle of the second short-axis direction drive unit 63 becomes 170°. Meanwhile, when the V protruding die 11 is provided as the weak portion forming portion, it is desired that a weakest portion be reliably formed at the time of the completion of step 1, and the punch 20 and the V protruding die 11 be not in direct contact with each other. Thus, step 2 may also be set to avoid overlapping in contrast to step 1. As described above, a step that causes overlap is designated, and an overlap amount (rotation angle) of a next step with respect to a previous step can be set appropriately. With the overlap, the punch cutter operates without necessarily stopping for each step, and trimming is performed more smoothly, thereby being capable of reducing a cycle time.

In this embodiment, trimming processing for a drawn article having a rectangular transverse cross-sectional shape in which an aspect ratio is relatively large has been described as an example. The present invention is not limited thereto, and the present invention can be applied also even when a difference (ratio) in length between the short side and the long side is small and even when the length of each side is the same.

Further, in this embodiment, as an example, the long-axis direction drive unit 61, the first short-axis direction drive unit 62, and the second short-axis direction drive unit 63 are described as being arranged as illustrated in Fig. 5 for convenience of description, but the present invention is not limited thereto. The long-axis direction drive unit 61 may be arranged on the right side in Fig. 5, arrangements of the first short-axis direction drive unit 62 and the second short-axis direction drive unit 63 may be reversed in the left-and-right direction, or arrangements of the first short-axis direction drive unit 62 and the second short-axis direction drive unit 63 may be reversed in the up-and-down direction. That is, the arrangements of the long-axis direction drive unit, the first short-axis direction drive unit, and the second short-axis direction drive unit according to the present invention are not limited to the arrangement example of the long-axis direction drive unit 61, the first short-axis direction drive unit 62, and the second short-axis direction drive unit 63 in this embodiment.

Incidentally, in this embodiment, as an example, the electric motors have been described as the drive sources of the long-axis direction drive unit 61, the first short-axis direction drive unit 62, and the second short-axis direction drive unit 63. However, the present invention is not limited thereto, and other drive sources, for example, a linear motor or a configuration using a linear-motion mechanism such as an actuator using fluid pressure such as hydraulic pressure, oil pressure, or air pressure may be employed. When such a linear-motion mechanism is used, the punch and the drive source are coupled to each other through intermediation of, for example, a rotatable joint such as a ball joint.

Further, in this embodiment, as an example, the case in which the punch 20 is brought close to the V protruding die 11 integrated with the die 10 to form the thin portion (weak portion) 100D having a tensile strength weaker than that of the other side wall portion (portion to be the scrap 100C) has been described, but the present invention is not limited thereto. The present invention is applicable to a case in which the thin portion (weak portion) 100D is not formed, and the V protruding die 11 may be configured to be moved by the drive source to form the thin portion (weak portion) 100D.

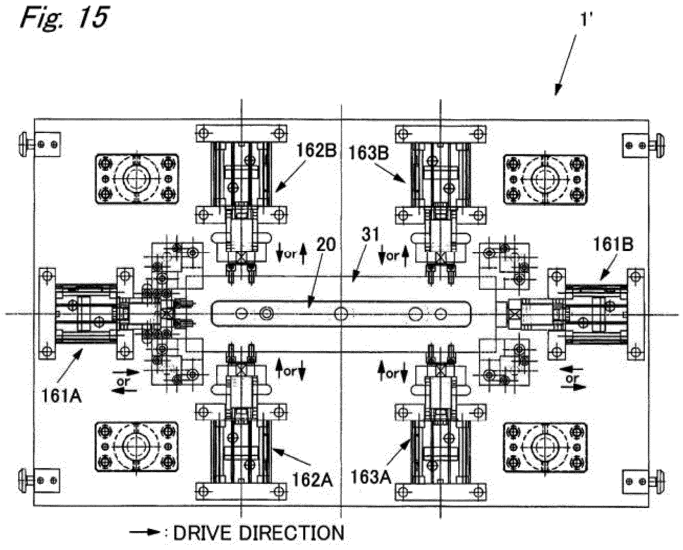

Further, in this embodiment, the configuration example in which the punch 20 is moved within a plane parallel to the bottom surface 101 of the drawn article 100 (for example, within a horizontal plane) by the three drive units that can be pushed and pulled (advanced and retreated) (for example, the long-axis direction drive unit 61, the first short-axis direction drive unit 62, and the second short-axis direction drive unit 63) to trim the upper edge portion of the drawn article 100 has been described, but the present invention is not limited thereto. As in a trimming device 1' illustrated in Fig. 15, the slide plate 31 that fixedly supports the punch 20 may also be supported by six drive units so as to be movable within a plane orthogonal to the depth direction of the drawn article 100 (for example, within a horizontal plane). Here, distal end portions of the six drive units are held in abutment against the plate 31 so as to be separable therefrom. Mechanical coupling is not provided, and hence the drive force acts only in the pushing direction. The six drive units may be arranged such that two drive units (reference symbols 161A and 161B) that advance and retreat along the long-axis direction are opposed to each other, two drive units (reference symbols 162A and 162B) that advance and retreat along the short-axis direction are opposed to each other, and in parallel to those drive units, two drive units (reference symbols 163A and 163B) that advance and retreat along the short-axis direction are opposed to each other. As illustrated in Fig. 15, drive directions in such a case may be arranged so as to be opposite to each other between the drive units arranged so as to be opposed to each other such that one drive unit performs a pushing operation (advancing operation) and the other drive unit performs a pulling operation (retreating operation).

Further, in this embodiment, as an example, a case in which trimming processing is performed with the opening side of the drawn article 100 facing upward has been described, but the present invention is not limited thereto, and trimming processing may be performed with the bottom portion (bottom surface) side of the drawn article 100 facing upward.

Further, in this embodiment, as an example, a device that supports a drawing depth direction of the drawn article 100 in a perpendicular direction to perform trimming has been described, but the present invention is not limited thereto, and, for example, a device configuration that supports the drawing depth direction of the drawn article 100 in the horizontal direction or a direction oblique to the horizontal direction to perform trimming may be employed. As a drive source of the drive unit in this case, a configuration using, for example, an actuator using fluid pressure such as hydraulic pressure, oil pressure, or air pressure or a linear motor can be employed.

As described above, according to the present invention, it is possible to provide a trimming device and method for a rectangular container, which enables high-quality trimming while suppressing, for example, occurrence of a matching burr with a relatively simpler configuration and without requiring skill or an advanced cam mechanism, and a rectangular container produced by the device or method.

The embodiment described above is merely an example for describing the present invention. It goes without saying that various modifications may be made without departing from the gist of the present invention.

### REFERENCE SIGNS

- 1: trimming device
- 2: devide frame
- 10: die
- 11: V protruding die
- 20: punch
- 30: punch holder
- 31: slide plate
- 40: cylinder/linear motor actuator
- 41: shaft
- 51: long-axis direction slider
- 51A: slide element
- 51B: guide
- 51C: slider
- 51D: shaft
- 51E: slider
- 51F: eccentric shaft
- 52: first short-axis direction slider
- 52A: slide element
- 52B: guide
- 52C: slider
- 52D: shaft
- 52E: slider
- 52F: eccentric shaft
- 53: second short-axis direction slider
- 53A: slide element
- 53D: shaft
- 53E: slider
- 53F: eccentric shaft
- 61: long-axis direction drive unit
- 61A: output rotation shaft
- 62: first short-axis direction drive unit
- 62A: output rotation shaft
- 63: second short-axis direction drive unit
- 63A: output rotation shaft
- 70: controller
- 100: drawn article/ rectangular container
- 100A: trim line
- 100B: product
- 100C: scrap
- 100D: thin portion/ weak portion
- 101: bottom surface
- 102A, 102B: side walls along short sides
- 103A, 103B: side walls along long sides
- 110: base portion
- 110A: positioning pin
- 120: holding plate
- 121, 122: elastic biasing element
- 130: cylinder mechanism/ linear motor mechanism
- 131: support base
- 161A: drive unit
- 161B: drive unit
- 162A: drive unit
- 162B: drive unit

- A: initial position
- 8: trimming position
- E1: predetermined eccentricity amount
- E2: predetermined eccentricity amount
- E3: predetermined eccentricity amount

## Claims

1. A trimming device (1) for a rectangular container (100), which is configured to cut a rectangular container (100) along a plane including a predetermined trim line (100A) parallel to a bottom surface (101), the rectangular container (100) having one end opened and a bottom portion at the other end and having a transverse cross-sectional shape parallel to the bottom surface (101) being a rectangular shape, the trimming device (1) comprising:
a die (10), which is integrally supported on a trimming device (1) main body, accommodates an outer periphery of the rectangular container (100), and is arranged along the trim line (100A);
a punch (20), which is accommodated inside the rectangular container (100) with a predetermined gap with the transverse cross-sectional shape inside the rectangular container (100), and is supported on the trimming device (1) main body so as to be movable within a plane parallel to the bottom surface (101);
a long-axis direction drive unit (61), which is configured to move the punch (20) along a long-axis direction in the transverse cross-sectional shape of the rectangular container (100);
a first short-axis direction drive unit (62), which is configured to move the punch (20) along a short-axis direction in the transverse cross-sectional shape of the rectangular container (100); and
a second short-axis direction drive unit (63), which is arranged side by side with the first short-axis direction drive unit (62) along the long-axis direction, and is configured to move the punch (20) along the short-axis direction in the transverse cross-sectional shape of the rectangular container (100).

2. The trimming device (1) for a rectangular container (100) according to claim 1, wherein the long-axis direction drive unit (61), the first short-axis direction drive unit (62), and the second short-axis direction drive unit (63) are driven independent of each other.

3. The trimming device (1) for a rectangular container (100) according to claim 1 or 2, the trimming device (1) being configured to:
drive the long-axis direction drive unit (61) and move the punch (20) along the long-axis direction to trim one short side (102A, 102B) of a rectangular container (100) along the trim line (100A) in cooperation with the die (10);
drive one of the first short-axis direction drive unit (62) and the second short-axis direction drive unit (63), which is on a side closer to the one short side (102A, 102B), and move the punch (20) in the short-axis direction from a state of the punch (20) that has ended the trimming, to incline the punch (20) and to trim a side of one long side (103A, 103B) on the one short side (102A, 102B) of the rectangular container (100) that is connected to the one short side (102A, 102B) along the trim line (100A), in cooperation with the die (10);
drive one of the first short-axis direction drive unit (62) and the second short-axis direction drive unit (63), which is on a side farther from the one short side (102A, 102B), and move the punch (20) in the short-axis direction from a state of the punch (20) that has ended the trimming, to return the punch (20) from the inclined state to a state of being parallel to the long-axis direction, and trim an uncut portion of the one long side (103A, 103B) along the trim line (100A) in cooperation with the die (10);
reversely drive the long-axis direction drive unit (61) and move the punch (20) in the long-axis direction from a state of the punch (20) that has ended the trimming, to trim the other short side (102A, 102B) of the rectangular container (100) along the trim line (100A) in cooperation with the die (10);
drive the first short-axis direction drive unit (62) and the second short-axis direction drive unit (63) and move the punch (20) in parallel toward the other long side (103A, 103B) of the rectangular container (100) from a state of the punch (20) that has ended the trimming, to trim an uncut portion of the other short side (102A, 102B) along the trim line (100A) in cooperation with the die (10);
drive one of the first short-axis direction drive unit (62) and the second short-axis direction drive unit (63), which is on a side closer to the other short side (102A, 102B), and move the punch (20) in the short-axis direction from a state of the punch (20) that has ended the trimming, to incline the punch (20) and trim a side of the other long side (103A, 103B) on the other short side (102A, 102B) along the trim line (100A) in cooperation with the die (10);
drive one of the first short-axis direction drive unit (62) and the second short-axis direction drive unit (63), which is on a side farther from the other short side (102A, 102B), and move the punch (20) in the short-axis direction from a state of the punch (20) that has ended the trimming, to return the punch (20) from the inclined state to a state of being parallel to the long-axis direction, and trim an uncut portion of the other long side (103A, 103B) along the trim line (100A) in cooperation with the die (10); and
drive the long-axis direction drive unit (61) and move the punch (20) in the long-axis direction from a state of the punch (20) that has ended the trimming, to trim an uncut portion of the one short side (102A, 102B) along the trim line (100A) in cooperation with the die (10).

4. The trimming device (1) for a rectangular container (100) according to claim 1 or 2, further comprising a weak portion (100D) forming portion configured to form, at the time of driving the long-axis direction drive unit (61) and moving the punch (20) in the long-axis direction to trim one short side (102A, 102B) of the rectangular container (100) along the trim line (100A) in cooperation with the die (10), a weak portion (100D) reduced in thickness from other portion on an opening side above the trim line (100A) of the one short side (102A, 102B) of the rectangular container (100) by using the movement of the punch (20).

5. A trimming method for a rectangular container (100), which is to be used for a trimming device (1) for a rectangular container (100), the trimming device (1) being configured to cut a rectangular container (100) along a plane including a predetermined trim line (100A) parallel to a bottom surface (101), the rectangular container (100) having one end opened and a bottom portion at the other end and having a transverse cross-sectional shape parallel to the bottom surface (101) being a rectangular shape, the trimming device (1) including:
a die (10), which is integrally supported on a trimming device (1) main body, accommodates an outer periphery of the rectangular container (100), and is arranged along the trim line (100A);
a punch (20), which is accommodated inside the rectangular container (100) with a predetermined gap with the transverse cross-sectional shape inside the rectangular container (100), and is supported on the trimming device (1) main body so as to be movable within a plane parallel to the bottom surface (101);
a long-axis direction drive unit (61), which is configured to move the punch (20) along a long-axis direction in the transverse cross-sectional shape of the rectangular container (100);
a first short-axis direction drive unit (62), which is configured to move the punch (20) along a short-axis direction in the transverse cross-sectional shape of the rectangular container (100); and
a second short-axis direction drive unit (63), which is arranged side by side with the first short-axis direction drive unit (62) along the long-axis direction, and is configured to move the punch (20) along the short-axis direction in the transverse cross-sectional shape of the rectangular container (100),
the trimming method comprising:
driving the long-axis direction drive unit (61) and moving the punch (20) along the long-axis direction to trim one short side (102A, 102B) of a rectangular container (100) along the trim line (100A) in cooperation with the die (10);
driving one of the first short-axis direction drive unit (62) and the second short-axis direction drive unit (63), which is on a side closer to the one short side (102A, 102B), and moving the punch (20) in the short-axis direction from a state of the punch (20) that has ended the trimming, to incline the punch (20) and to trim a side of one long side (103A, 103B) on the one short side (102A, 102B) of the rectangular container (100) that is connected to the one short side (102A, 102B) along the trim line (100A), in cooperation with the die (10);
driving one of the first short-axis direction drive unit (62) and the second short-axis direction drive unit (63), which is on a side farther from the one short side (102A, 102B), and moving the punch (20) in the short-axis direction from a state of the punch (20) that has ended the trimming, to return the punch (20) from the inclined state to a state of being parallel to the long-axis direction, and trim an uncut portion of the one long side (103A, 103B) along the trim line (100A) in cooperation with the die (10);
reversely driving the long-axis direction drive unit (61) and moving the punch (20) in the long-axis direction from a state of the punch (20) that has ended the trimming, to trim the other short side (102A, 102B) of the rectangular container (100) along the trim line (100A) in cooperation with the die (10);
driving the first short-axis direction drive unit (62) and the second short-axis direction drive unit (63) and move the punch (20) in parallel toward the other long side (103A, 103B) of the rectangular container (100) from a state of the punch (20) that has ended the trimming, to trim an uncut portion of the other short side (102A, 102B) along the trim line (100A) in cooperation with the die (10);
driving one of the first short-axis direction drive unit (62) and the second short-axis direction drive unit (63), which is on a side closer to the other short side (102A, 102B), and moving the punch (20) in the short-axis direction from a state of the punch (20) that has ended the trimming, to incline the punch (20) and trim a side of the other long side (103A, 103B) on the other short side (102A, 102B) along the trim line (100A) in cooperation with the die (10);
driving one of the first short-axis direction drive unit (62) and the second short-axis direction drive unit (63), which is on a side farther from the other short side (102A, 102B), and moving the punch (20) in the short-axis direction from a state of the punch (20) that has ended the trimming, to return the punch (20) from the inclined state to a state of being parallel to the long-axis direction, and trim an uncut portion of the other long side (103A, 103B) along the trim line (100A) in cooperation with the die (10); and
driving the long-axis direction drive unit (61) and moving the punch (20) in the long-axis direction from a state of the punch (20) that has ended the trimming, to trim an uncut portion of the one short side (102A, 102B) along the trim line (100A) in cooperation with the die (10).

6. The trimming method for a rectangular container (100) according to claim 5, further comprising forming, at the time of driving the long-axis direction drive unit (61) and moving the punch (20) in the long-axis direction to trim the one short side (102A, 102B) of the rectangular container (100) along the trim line (100A) in cooperation with the die (10), a weak portion (100D) reduced in thickness from other portion on an opening side above the trim line (100A) of the one short side (102A, 102B) of the rectangular container (100) by using the movement of the punch (20).

7. A rectangular container (100), which is produced by the trimming device (1) for a rectangular container (100) of any one of claims 1 to 4.

8. A rectangular container (100), which is produced by the trimming method for a rectangular container (100) of any one of claim 5 or 6.
